(19) Europäisches Patentamt
European Patent Office
Office européen des brevets

(11) **EP 3 161 514 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **15717898.9**

(22) Anmeldetag: **23.04.2015**

(51) Int Cl.:
*G01S 13/34* (2006.01)       *G01S 13/42* (2006.01)
*G01S 13/58* (2006.01)       *G01S 7/35* (2006.01)
*G01S 13/931* (2020.01)      *G01S 13/02* (2006.01)
*G01S 13/536* (2006.01)

(86) Internationale Anmeldenummer:
**PCT/EP2015/058771**

(87) Internationale Veröffentlichungsnummer:
**WO 2015/197226 (30.12.2015 Gazette 2015/52)**

(54) **MIMO-RADARMESSVERFAHREN**

MIMO RADAR MEASUREMENT METHOD

PROCÉDÉ DE MESURE D'UN MIMO RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2014 DE 102014212284**

(43) Veröffentlichungstag der Anmeldung:
**03.05.2017 Patentblatt 2017/18**

(73) Patentinhaber: **Robert Bosch GmbH**
**70442 Stuttgart (DE)**

(72) Erfinder:
• LOESCH, Benedikt
  70195 Stuttgart (DE)
• SCHOOR, Michael
  70195 Stuttgart (DE)

(56) Entgegenhaltungen:
EP-A1- 0 730 166       EP-A1- 2 060 929
WO-A2-2010/115418      DE-A1-102012 008 350
JP-A- 2009 288 223

EP 3 161 514 B1

**Beschreibung**

STAND DER TECHNIK

Die Erfindung betrifft ein Verfahren zur Ortung eines Radarziels mit einem winkelauflösenden MIMO-FMCW-Radarsensor, bei dem empfangene Signale mit dem gesendeten Signal zu Basisbandsignalen heruntergemischt werden, und der Winkel eines georteten Radarziels anhand von Amplituden und/oder Phasenbeziehungen zwischen Basisbandsignalen bestimmt wird, die für unterschiedliche Auswahlen von zum Senden und Empfangen verwendeten Antennenelementen des Radarsensors erhalten werden.

Weiter betrifft die Erfindung einen Radarsensor, insbesondere für Kraftfahrzeuge, der zur Durchführung dieses Verfahrens ausgebildet ist.

Bei Kraftfahrzeugen werden FMCM-Radarsensoren zur Erfassung des Verkehrsumfelds eingesetzt, insbesondere zur Ortung anderer Fahrzeuge. Die Ortungsergebnisse können für verschiedene Assistenzfunktionen genutzt werden, beispielsweise für eine automatische Abstandsregelung, eine automatische Kollisionswarnung oder auch die automatische Auslösung eines Notbremsvorgangs bei akuter Kollisionsgefahr.

Bei FMCW-(Frequency Modulated Continuous Wave)-Radarsensoren wird ein Sendesignal mit rampenförmig modulierter Frequenz verwendet. Das Signal wird während des Verlaufs der Rampe kontinuierlich gesendet. Aus einem Empfangssignal wird durch Mischen mit dem Sendesignal ein Basisbandsignal erzeugt, welches abgetastet und ausgewertet wird.

Die Frequenz des Basisbandsignals entspricht dem Frequenzunterschied zwischen dem zu einem gegebenen Zeitpunkt gesendeten Signal und dem zum selben Zeitpunkt empfangenen Signal. Aufgrund der Frequenzmodulation des Sendesignals ist dieser Frequenzunterschied von der Laufzeit des Signals vom Radarsensor zum Objekt und zurück und somit vom Abstand des Objekts abhängig. Aufgrund des Doppler-Effektes enthält der Frequenzunterschied jedoch auch einen Anteil, der durch die Relativgeschwindigkeit des Objektes bedingt ist. Die Messung des Frequenzunterschieds auf einer einzelnen Rampe erlaubt deshalb noch keine Bestimmung des Abstands und der Relativgeschwindigkeit, sondern liefert nur eine lineare Beziehung zwischen diesen Größen. Diese Beziehung lässt sich in einem Abstands-Geschwindigkeits-Diagramm (d-v-Diagramm) als Gerade darstellen.

Es sind FMCW-Radarsensoren bekannt, bei denen mit einer Sequenz von identischen, verhältnismäßig kurzen Rampen, sogenannten "Rapid Chirps" gearbeitet wird, die im Verhältnis zu ihrer Dauer einen hohen Frequenzhub haben und deshalb so steil sind, dass im Basisbandsignal der abstandsabhängige Anteil der Frequenzverschiebung dominiert, während die Dopplerverschiebung durch die Sequenz der Rampen abgetastet wird. Um innerhalb eines Messbereichs der Relativgeschwindigkeit eine eindeutige Bestimmung der Relativgeschwindigkeit zu gestatten, ist daher eine ausreichend hohe Wiederholrate der kurzen Rampen erforderlich. Insbesondere muss der Zeitversatz zwischen aufeinander folgenden kurzen Rampen kleiner sein als die halbe Periodendauer der Dopplerfrequenz.

Zumeist weist der Radarsensor mehrere Antennenelemente auf, die in Abstand zueinander auf einer Linie, beispielsweise einer Horizontalen angeordnet sind, so dass unterschiedliche Azimutwinkel der georteten Objekte zu Differenzen in den Lauflängen führen, die die Radarsignale vom Objekt bis zum jeweiligen Antennenelement zurückzulegen haben. Diese Lauflängendifferenzen führen zu entsprechenden Unterschieden in der Phase der Signale, die von den Antennenelementen empfangen und in den zugehörigen Auswertungskanälen ausgewertet werden. Durch Abgleich der in den verschiedenen Kanälen empfangenen (komplexen) Amplituden mit entsprechenden Amplituden in einem Antennendiagramm lässt sich dann der Einfallswinkel des Radarsignals und damit der Azimutwinkel des georteten Objekts bestimmen.

Bei einem MIMO-Radar (Multiple Input / Multiple Output) wird ein größeres Winkelauflösungsvermögen dadurch erreicht, dass man nicht nur mit mehreren empfangenden Antennenelementen arbeitet, sondern auch mit mehreren sendenden Antennenelementen, wobei unterschiedliche Kombinationen von sendenden und empfangenden Antennenelementen ausgewertet werden, die zu jeweiligen Lauflängendifferenzen eines reflektierten Signals führen.

Bei einem MIMO-Radar müssen die mit verschiedenen Auswahlen der sendenden Antennenelemente gesendeten Signale zueinander orthogonal oder zeitlich trennbar sein. Das lässt sich beispielsweise durch Codemultiplex, Frequenzmultiplex oder Zeitmultiplex erreichen. Das Codemultiplex-Verfahren erfordert jedoch einen hohen Aufwand und ermöglicht nur eine begrenzte Orthogonalität der Signale. Bei Frequenzmultiplex-Verfahren besteht der Nachteil, dass die Phase und die DopplerVerschiebung von der jeweiligen Wellenlänge abhängig sind. Das hier vorgeschlagene Verfahren basiert deshalb auf dem Zeitmultiplex-Prinzip. Allerdings besteht dabei das Problem, dass Relativbewegungen der georteten Objekte in Verbindung mit dem Zeitunterschied zwischen den Messungen mit verschiedenen Schaltzuständen zu Phasenunterschieden führen, die die nachfolgende Winkelschätzung erschweren.

WO 2010/115418 A2 beschreibt ein Radarsystem für Fahrerassistenzsysteme im Kraftfahrzeug. Über die Abtastwerte jeder Frequenzrampe und jedes Empfangskanals wird eine diskrete Fouriertransformation (DFT) gebildet. Über die in den Frequenzrampen anfallenden komplexen Spektralwerte wird eine zweite DFT gerechnet. Nach der zweiten DFT für die Relativgeschwindigkeiten ergibt sich für jeden Empfangskanal ein zweidimensionales komplexwertiges Spektrum. Nach einer dritten DFT für Azimutwinkel ergibt sich ein dreidimensionales komplexwertiges Spektrum, wobei die einzelnen Zellen als Entfernung-Relativgeschwindigkeit-Winkel-Tore bezeichnet werden. In einem anderen Beispiel mit einer Empfangsantenne werden vier Sendeantennen sequentiell betrieben; in jeder Rampe sendet jeweils nur eine Antenne, wobei von Rampe zu Rampe zur jeweils nächsten Antenne geschaltet wird. Die Signalauswertung besteht weiterhin aus einer dreidimensionalen DFT.

EP 0730166 A1 beschreibt ein Verfahren zur Verkehrserfassung mit einem Radargerät nach dem FM-CW-Prinzip. Mit einer Abtastfrequenz werden zwei Geschwindigkeitsmessungen durchgeführt, wobei die zweite Messung um einen zeitlichen Betrag gegenüber der ersten Messung versetzt ist; und wobei von beiden Abtastwertpaketen eine Fourieranalyse durchgeführt wird, wobei die Phasenwinkeldifferenz der beiden Abtastpakete einen groben, im interessierenden Geschwindigkeitsbereich eindeutigen Meßwert liefert, welcher mit den vieldeutigen Meßwerten eines einzelnen Abtastpaketes verknüpft wird, um den genauen eindeutigen Geschwindigkeitswert zu bestimmen.

DE 102012008350 A1 betrifft ein Verfahren zur Abstimmung von Abstand und Radialgeschwindigkeit eines Objekts mittels Radarsignalen, bei dem Range-Doppler-Matrizen für zwei Gruppen von Rampen bestimmt werden. Zum Zwecke der Detektion werden die Signale pro Zelle inkohärent Betragsmäßig addiert.

JP 2009/288223 A betrifft ein Radarverfahren mit einer Sendefrequenz, der vier Arten von Frequenzmodulationen überlagert werden.

EP 2060929 A1 betrifft ein Radarverfahren mit einem Sägezahn-modulierten Sendesignal.

OFFENBARUNG DER ERFINDUNG

Aufgabe der Erfindung ist es, ein Zeitmultiplex-Verfahren für ein MIMO-Radar anzugeben, das eine genauere Winkelschätzung erlaubt.

Diese Aufgabe wird erfindungsgemäß gelöst durch ein Verfahren nach Anspruch 1. Es ist ein Verfahren der eingangs genannten Art, bei dem unter anderem:

(a) das gesendete Signal rampenförmig frequenzmoduliert wird und ein Modulationsmuster aufweist, das mehrere Sequenzen von Rampen umfasst, die innerhalb der jeweiligen Sequenz mit einem Zeitintervall zeitversetzt aufeinander folgen,
wobei wenigstens zwei der Sequenzen unterschiedlichen Sende-Schaltzuständen, die sich in der Auswahl der zum Senden verwendeten Antennenelemente unterscheiden, zugeordnet sind und zeitlich ineinander verschachtelt sind, wobei zwischen aufeinander folgenden Rampen, die unterschiedlichen Sende-Schaltzuständen zugeordnet sind, umgeschaltet wird zwischen den betreffenden Sende-Schaltzuständen,
wobei wenigstens einem der Sende-Schaltzustände jeweils wenigstens zwei der Sequenzen zugeordnet sind, die zeitlich ineinander verschachtelt sind und untereinander in Bezug auf eine erste Sequenz einen einer jeweiligen weiteren Sequenz zugeordneten Zeitversatz aufweisen,

(b) aus den Basisbandsignalen zumindest für den wenigstens einen Sende-Schaltzustand, dem mehrere Sequenzen zugeordnet sind, gesondert für jede dieser Sequenzen durch zweidimensionale Fourier-Transformation ein zweidimensionales Spektrum berechnet wird, wobei in der ersten Dimension Rampe für Rampe transformiert wird und in der zweiten Dimension über einen Rampenindex transformiert wird, der die Rampen innerhalb der Sequenz zählt,

(c) anhand einer Position eines Peaks in wenigstens einem zweidimensionalen Spektrum der Basisbandsignale Werte für die Relativgeschwindigkeit eines Radarziels bestimmt werden, die mit einer vorbestimmten Geschwindigkeitsperiode periodisch sind,

(d) Phasenbeziehungen von Spektralwerten, die an jeweils der gleichen Position und jeweils für den gleichen Sende-Schaltzustand in den gesondert berechneten zweidimensionalen Spektren erhalten werden, überprüft werden auf Übereinstimmung mit für mehrere der periodischen Werte der Relativgeschwindigkeit bei dem jeweiligen Sende-Schaltzustand erwarteten Phasenbeziehungen, wobei die erhaltene Phasenbeziehung von zweien der Spektralwerte eine Mehrdeutigkeit für einen dazugehörigen Wert der Relativgeschwindigkeit innerhalb eines Messbereichs für die Relativgeschwindigkeit ergibt, und dass

(e) aus den bestimmten, periodischen Werten der Relativgeschwindigkeit anhand des Ergebnisses der Überprüfung ein Schätzwert für die Relativgeschwindigkeit des Radarziels ausgewählt wird, wobei der Schätzwert für die Relativgeschwindigkeit des Radarziels in dem Messbereich für die Relativgeschwindigkeit eindeutig bestimmt wird.

Die Sequenzen sind zeitlich ineinander verschachtelt. Das heisst, in Lücken zwischen den Rampen einer Sequenz sind Rampen der jeweiligen anderen Sequenz(en) angeordnet. Der Begriff "ineinander verschachtelt" wird hier synonym zu den Begriffen "miteinander verzahnt" oder "miteinander verwoben" verwendet.

Über die jeweilige Sequenz der Rampen erfolgt eine Unterabtastung der Dopplerverschiebungsfrequenz, so dass die erhaltene Information über die Relativgeschwindigkeit mit einer Mehrdeutigkeit behaftet ist. Insbesondere ist der Wert der Relativgeschwindigkeit periodisch mit einem Geschwindigkeitsintervall

$$\Delta v = \frac{c}{2 f_0 T_{r2r}} \tag{1}$$

wobei c die Lichtgeschwindigkeit ist, $f_0$ die mittlere Sendefrequenz ist und Tr2r das Zeitintervall zwischen den Rampen innerhalb einer Sequenz ist. Aus einer Position eines dem Radarziel zugeordneten Peaks in einem zweidimensionalen Spektrum der abgetasteten Basisbandsignale wird somit ein mit einer Mehrdeutigkeit behafteter Wert der Relativgeschwindigkeit des Radarziels bestimmt. Die Mehrdeutigkeit kann dann aufgelöst werden, indem untersucht wird, wie gut die für die jeweiligen Werte der Relativgeschwindigkeit erwarteten Phasenbeziehungen zwischen den Signalen der demselben Sende-Schaltzustand zugeordneten Sequenzen übereinstimmen mit der gemessenen Phasenbeziehung. Die erwartete Phasenbeziehung hängt jeweils von der Relativgeschwindigkeit und dem Zeitversatz zwischen den betreffenden Sequenzen ab.

Dies gestattet eine eindeutige Schätzung der Relativgeschwindigkeit innerhalb eines Geschwindigkeitsmessbereichs, der beispielsweise ein Mehrfaches des Eindeutigkeitsbereichs einer Messung mit nur einer der Sequenzen der Rampen sein kann. Vorteilhaft ist insbesondere, dass relativ große Zeitintervalle zwischen den Rampen, d.h. zwischen den Rampenmittelpunkten, einer Sequenz möglich sind, so dass der Hardwareaufwand verringert werden kann oder bei gleichem Hardwareaufwand eine genauere Ortung ermöglicht wird.

Durch die dadurch erleichterte, zeitliche Verschachtelung der Sequenzen ergibt sich der besondere Vorteil, dass die zur Winkelbestimmung verwendeten Basisbandsignale bzw. deren Spektren, die mit unterschiedlichen Sende-Schaltzuständen erhalten werden, nahezu gleichzeitig gemessen werden, so dass aus Relativbewegungen resultierende Phasenverschiebungen minimiert werden können und/oder besonders genau korrigiert werden können.

Es kann somit eine verbesserte Winkelschätzung ermöglicht werden trotz durch geringere Zeitintervalle verringerter Hardwarekosten.

Innerhalb einer Periode des Modulationsmusters, deren Länge dem Zeitintervall Tr2r entspricht, sind die Rampen vorzugsweise in ungleichmäßigen Abständen angeordnet, so dass das Modulationsmuster trotz des regelmäßigen Zeitintervalls Tr2r möglichst wenig Symmetrie aufweist. Aufgrund des einheitlichen Zeitintervalls Tr2r wiederholen sich die Zeitversätze zwischen den Rampen unterschiedlicher Sequenzen von Periode zu Periode.

Vorzugsweise wird in dem Schritt (e) des Auswählens eines Schätzwertes für die Relativgeschwindigkeit des Radarziels der Schätzwert für die Relativgeschwindigkeit in einem Messbereich für die Relativgeschwindigkeit eindeutig bestimmt, wobei ein oberer Maximalwert $v_{max}$ des Messbereichs in folgender Beziehung zu dem Zeitabstand Tr2r der Rampenmittelpunkte innerhalb einer Sequenz steht:

$$Tr2r > c/(4f_0 v_{max})$$

wobei c die Lichtgeschwindigkeit ist und $f_0$ die mittlere Sendefrequenz. Dies entspricht einer Unterabtastung einer maximal zu detektierenden Relativgeschwindigkeit $v_{max}$ eines Radarziels durch die jeweilige Sequenz von Rampen mit dem Zeitabstand Tr2r zwischen aufeinanderfolgenden Rampen. Vorzugsweise beträgt Tr2r wenigstens ein Mehrfaches der genannten Größe auf der rechten Seite der Beziehung.

In dem Schritt (e) des Auswählens eines Schätzwertes für die Relativgeschwindigkeit des Radarziels wird der Schätzwert für die Relativgeschwindigkeit in einem Messbereich für die Relativgeschwindigkeit eindeutig bestimmt, wobei ein oberer Maximalwert $v_{max}$ des Messbereichs in folgender Beziehung zu dem jeweiligen Zeitversatz T12 der jeweiligen weiteren Sequenz steht:

$$T12 > c/(4f_0 v_{max})$$

Vorzugsweise beträgt T12 wenigstens ein Mehrfaches der genannten Größe auf der rechten Seite der Beziehung. Indem ein solcher relativ großer Zeitversatz T12 zwischen den Sequenzen der Rampen gewählt wird, kann der Hardwareaufwand zur Durchführung des Verfahrens verringert werden, da die resultierende Mehrdeutigkeit der gemessenen Phasenbeziehung zugelassen werden kann. Denn ein eindeutiger Schätzwert für die Relativgeschwindigkeit kann innerhalb des größeren Messbereichs dennoch bestimmt werden.

Vorteilhafte Ausgestaltungen der Erfindung sind in den Unteransprüchen angegeben.

Bei einer winkelauflösenden Messung sind Antennenelemente in einer Richtung, in der der Radarsensor winkelauflösend ist, in verschiedenen Positionen angeordnet. Beispielsweise werden mehrere Antennenelemente zum Empfang verwendet. Für ein idealisiertes, annähernd punktförmiges Radarziel in einer jeweiligen Winkelposition besteht zwischen den in verschiedenen Antennenelementen empfangenen Signalen eine charakteristische Phasen- und Amplitudenbeziehung. Die Amplitudenverhältnisse zwischen den empfangenen Signalen sind vom Richtungswinkel und von den Empfindlichkeitskurven der Antennenelemente abhängig. Durch Auswertung der Phasenbeziehungen und/oder Auswertung der Amplitudenbeziehungen ist es möglich, die Winkelposition eines georteten Radarobjektes zu bestimmen.

Die Abhängigkeit der Amplitude und der Phase des von einem Antennenelement gesendeten und nach Reflexion am Radarziel auf einem Antennenelement empfangenen Signals von der Winkelposition des georteten Radarziels lässt sich für ein Standardobjekt in einem gegebenen Abstand und mit einer gegebenen Reflektionsstärke in einem Antennendiagramm darstellen. Die Winkelposition eines Radarziels lässt sich beispielsweise bestimmen durch Abgleichen der für verschiedene Auswahlen von zum Senden und zum Empfangen verwendeten Antennenelementen für dasselbe Radarziel erhaltenen Amplituden und/oder Phasen mit den entsprechenden Antennendiagrammen.

Vorzugsweise haben innerhalb einer jeweiligen Sequenz aufeinanderfolgende Rampen eine gleiche Rampensteigung und eine gleiche Differenz ihrer Rampenmittenfrequenzen sowie besonders bevorzugt einen gleichen Frequenzhub, wobei die besagte Differenz der Rampenmittenfrequenzen optional ungleich Null ist, und wobei Rampen, welche den gleichen Rampenindex in den jeweiligen Sequenzen haben, die gleiche Rampensteigung und die gleiche Rampenmittenfrequenz sowie besonders bevorzugt einen gleichen Frequenzhub aufweisen. Wenn, bis auf die optional ungleich Null gewählte Frequenzdifferenz von Rampe zu Rampe, der Frequenzverlauf aller Rampen aller Sequenzen identisch ist, können die aus der Relativgeschwindigkeit eines Radarziels resultierenden Phasenbeziehungen besonders genau gemessen werden, und die Winkelbestimmung wird vereinfacht.

Wenn der Zeitversatz zwischen den Sequenzen und der Zeitabstand der Rampen innerhalb einer Sequenz in der gleichen Größenordnung liegen, kann die zur Verfügung stehende Messzeit besonders gut genutzt werden. Außerdem können Einflüsse einer Objektbeschleunigung auf die Phasenbeziehung zwischen den Basisbandsignalen der einzelnen Sequenzen so möglichst klein gehalten werden. Außerdem können so günstige Werte für den Zeitversatz zwischen den Sequenzen und dem Zeitabstand der Rampen innerhalb einer Sequenz gewählt werden, die möglichst "inkommensurabel" sind, also nicht etwa Vielfache voneinander sind. Aus der Auflösung der Mehrdeutigkeit ergibt sich dann ein besonders großer Messbereich für die Relativgeschwindigkeit. Dementsprechend enthält das Modulationsmuster Pausen zwischen den Rampen. Inbesondere weist das Modulationsmuster vorzugsweise wenigstens eine Pause auf, die regelmäßig zwischen jeweils zwei aufeinanderfolgenden Rampen einer Sequenz wiederkehrt, mit einem Zeitintervall von Pause zu Pause, das gleich dem Zeitintervall zwischen den Rampen einer Sequenz ist.

Vorzugsweise sind während eines überwiegenden Zeitraums des Modulationsmusters abwechselnd Rampen der jeweiligen Sequenzen angeordnet, d.h. die Sequenzen überlappen sich zeitlich weitgehend. Vorzugsweise ist der einer jeweiligen weiteren Sequenz zugeordnete Zeitversatz zwischen den Rampen der weiteren Sequenz und den betreffenden Rampen der ersten Sequenz kleiner als das Zweifache des Zeitintervalls zwischen den Rampen innerhalb einer jeweiligen Sequenz, besonders bevorzugt kleiner als dieses Zeitintervall. Letzteres ist gleichbedeutend damit, dass zwischen zwei aufeinanderfolgenden Rampen einer ersten Sequenz stets eine jeweilige Rampe einer jeweiligen weiteren Sequenz von Rampen, die dem gleichen Sende-Schaltzustand zugeordnet sind, gesendet wird.

Vorzugsweise werden die gesondert berechneten zweidimensionalen Spektren zu einem zweidimensionalen Spektrum der Basisbandsignale, insbesondere einem Leistungsspektrum, zusammengeführt, welches in dem Schritt (c) des Bestimmens von Werten für die Relativgeschwindigkeit verwendet wird. Das Zusammenführen ist beispielsweise nicht-phasenkohärent, vorzugsweise eine nicht-phasenkohärente Summation der Quadrate der Absolutbeträge der Spektralwerte zu einem Leistungsspektrum. Dadurch kann die Detektion eines Peaks verbessert werden. Insbesondere kann die durch die Aufteilung der zur Verfügung stehenden Messzeit in mehrere Sequenzen von Rampen sowie die Pausen bewirkte Verringerung des Signal-Rausch-Verhältnisses der gesondert berechneten Spektren so größtenteils ausgeglichen werden.

Vorzugsweise wird bei dem Überprüfen der Phasenbeziehung eine Beziehung gemäß der Gleichung

$$\Delta\varphi_{12,m} = 2\pi \frac{2}{c} f_0 T_{12,m} v \qquad\qquad (2)$$

verwendet, welche eine erwartete Phasendifferenz $\Delta\varphi_{12,m}$ zwischen einer Phase des Spektralwerts des jeweiligen Spektrums einer weiteren Sequenz und einer Phase des Spektralwerts des Spektrums der ersten Sequenz des gleichen Sende-Schaltzustands m in Beziehung setzt mit dem der weiteren Sequenz zugeordneten Zeitversatz T12 und der Relativgeschwindigkeit v, wobei c die Lichtgeschwindigkeit ist und $f_0$ die mittlere Sendefrequenz ist. Anstelle von T12 und $\Delta\varphi_{12,m}$ für die zweite Sequenz kann allgemein T1i,m bzw. $\Delta\varphi_{1i,m}$ für die i-te Sequenz, i>1, der dem Sende-Schaltzustand m zugeordneten Sequenzen geschrieben werden.

Vorzugsweise wird bei dem Überprüfen der Phasenbeziehung ein von der Relativgeschwindigkeit v abhängiger und optional von dem Sende-Schaltzustand m abhängiger Steuerungsvektor a(v,m) der Messung gemäß der Gleichung

$$a(v,m) = \frac{1}{\sqrt{I}} \begin{vmatrix} 1 \\ M \\ e^{2\pi j \frac{2}{c} f_0 T_{1i,m} v} \end{vmatrix} \qquad (3)$$

verwendet, wobei m den jeweiligen Sende-Schaltzustand bezeichnet, I die Anzahl der Sequenzen ist, i=1,...,I die Sequenzen zählt, und in der i-ten Komponente des Vektors T1i,m für i>1 der der i-ten Sequenz zugeordete Zeitversatz gegenüber der ersten Sequenz ist, für die dem m-ten Sende-Schaltzustand zugeordneten Sequenzen. Der Zeitversatz zwischen Sequenzen bezieht sich stets auf Sequenzen, die einem selben Sende-Schaltzustand zugeordnet sind. Der Steuerungsvektor a(v) ist in dieser Notation ein Spaltenvektor, dessen Komponenten jeweils den erwarteten Phasenunterschied der i-ten Sequenz gegenüber der Teilmessung der ersten Sequenz beschreiben, wobei der erwartete Phasenunterschied jeweils als Phase einer komplexen Exponentialfunktion bestimmt ist. Die Anzahl der Komponenten des Vektors ist I. Der gemeinsame Vorfaktor ist ein Normierungsfaktor und beträgt 1, geteilt durch die Quadratwurzel aus der Anzahl I der verwendeten Sequenzen. Im Exponenten der Exponentialfunktion bezeichnet j die imaginäre Einheit, sofern nicht anders angegeben.

Vorzugsweise werden bei unterschiedlichen Sende-Schaltzuständen m unterschiedliche Zeitversätze T1i,m jeweiliger weiteren Sequenzen zu der jeweiligen ersten Sequenz verwendet. Mit anderen Worten unterscheidet sich jeder für eine weiteren Sende-Schaltzustand mit mehreren zugeordneten Sequenzen verwendeter Zeitversatz T1h,m , wobei m>1 und h=1,..,H, von jedem für einen ersten Sende-Schaltzustand verwendeten Zeitversatz T1i,1 mit i=1,..,I, wobei H die Anzahl der verwendeten Sequenzen des weiteren Sende-Schaltzustands ist und sich optional von I unterscheidet. Der Steuerungsvektor a(v,m) hängt somit von dem jeweiligen Zeitversatz und somit vom jeweiligen Sende-Schaltzustand ab.

Vorzugsweise sind einem ersten und einem zweiten der Sende-Schaltzustände jeweils wenigstens zwei der Sequenzen zugeordnet, die zeitlich ineinander verschachtelt sind und untereinander in Bezug auf eine erste Sequenz des jeweiligen Sende-Schaltzustands einen einer jeweiligen weiteren Sequenz des Sende-Schaltzustands zugeordneten Zeitversatz aufweisen, wobei bei den unterschiedlichen Sende-Schaltzuständen unterschiedliche Zeitversätze der weiteren Sequenzen verwendet werden.

Vorzugsweise werden die für die Bestimmung des Winkels verwendeten Basisbandsignale einer Phasenkorrektur unterzogen, die für den Schätzwert der Relativgeschwindigkeit erwartete Phasenverschiebungen kompensiert.

Vorzugsweise ist bei Rampen mit jeweils dem gleichen Rampenindex in jeweiligen Sequenzen im Modulationsmuster die Reihenfolge der Sende-Schaltzustände, denen die Rampen jeweils zugeordnet sind, gemischt. Mit anderen Worten, die Reihenfolge weicht von der generischen Reihenfolge ab, bei der die Sende-Schaltzustände nacheinander mit ihren jeweiligen zugeordneten Rampen auftreten. Dadurch können Auswirkungen eines Schätzfehlers der Relativgeschwindigkeit auf die Winkelbestimmung vermindert werden. Insbesondere wird vorzugsweise zwischen zwei Rampen einer Sequenz des ersten oder zweiten Sende-Schaltzustands mit gleichem Rampenindex stets wenigstens eine Rampe einer Sequenz des jeweils anderen Sende-Schaltzustands mit dem gleichen Rampenindex gesendet.

Die Kenntnis des Steuerungsvektors a(v,m) erlaubt es, eine (unter geeigneten Bedingungen eindeutige) Beziehung zwischen der Relativgeschwindigkeit v des Radarziels und den empfangenen komplexen Spektralwerten an der Position des Peaks herzustellen und aus den Phasenbeziehungen der empfangenen Signale auf die Relativgeschwindigkeit v des Radarziels zu schließen. Da in der Praxis die empfangenen Signale jedoch mehr oder weniger verrauscht sein werden, lässt sich die Geschwindigkeit nicht exakt berechnen, sondern lediglich schätzen, beispielsweise mit Hilfe einer Maximum-Likelihood-Schätzung.

Ein Messvektor wird beispielsweise für einen Empfangskanal n definiert als

$$a_{k,l}(n,m) = \begin{vmatrix} x_1(n,m) \\ M \\ x_I(n,m) \end{vmatrix} \qquad (4)$$

wobei mit i=1,...,I, in der i-ten Komponente des Vektors $x_i(n,m)$ einen komplexen Spektralwert an einer Position k,l des zweidimensionalen Spektrums des der abgetasteten Basisbandsignale der i-ten Sequenz von Rampen des Empfangskanals n und des Sende-Schaltzustands m bezeichnet. Beispielsweise zählt n die Empfangskanäle, mit n=1,...,N bei N Empfangskanälen, und m zählt die Sende-Schaltzustände, mit m=1,...M bei M Sende-Schaltzuständen.

KURZBESCHREIBUNG DER ZEICHNUNGEN

Im folgenden werden Ausführungsbeispiele anhand der Zeichnung näher erläutert.
Es zeigen:

Fig. 1   ein Diagramm eines MIMO-FMCW-Radarsensors mit zwei Sende-Antennenelementen und vier Empfangs-Antennenelementen;

Fig. 2   ein Modulationsmuster mit vier Sequenzen gleichartiger Rampen, die zeitversetzt gesendet werden;

Fig. 3   ein Geschwindigkeits/Abstands-Diagramm mit mit einem vorbestimmten Intervall periodischen Werten der Relativgeschwindigkeit eines Radarziels;

Fig. 4   ein detaillierteres Blockdiagramm einer Auswerteeinrichtung des MIMO-FMCW-Radarsensors; und

Fig. 5   ein weiteres Beispiel eines Modulationsmusters.

DETAILLIERTE BESCHREIBUNG VON AUSFÜHRUNGSBEISPIELEN

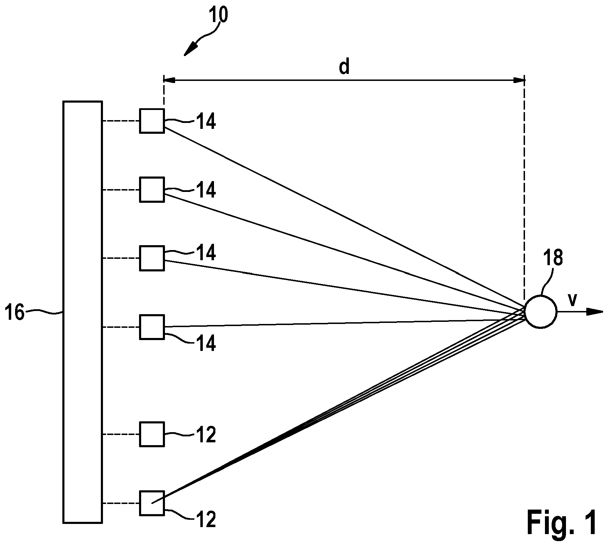

In Fig. 1 ist ein Diagramm eines sehr einfachen Beispiels eines (MIMO) FMCW-Radarsensors 10 dargestellt, der in diesem Beispiel nur zwei Sende-Antennenelemente 12 und vier Empfangs-Antennenelemente 14 aufweist. In der Praxis sind größere Anzahlen der Antennenelemente möglich. Die Sende-Antennenelemente 12 werden von einer Steuer- und Auswerteeinheit 16 gespeist und emittieren Radarsignale, die an einem Objekt 18 reflektiert und von jedem der Empfangs-Antennenelemente 14 empfangen werden. Die Sende-Antennenelemente 12 und Empfangs-Antennenelemente 14 sind jeweils gleichartig aufgebaut und haben daher übereinstimmende Sichtbereiche. Die Sende- und Empfangs-Antennenelemente können jeweils aus einem Patch-Antennen-Array bestehen.
Die empfangenen Signale werden zu Basisbandsignalen heruntergemischt und in der Steuer- und Auswerteeinheit 16 ausgewertet. Der Radarsensor 10 ist beispielsweise vorn in einem Kraftfahrzeug eingebaut ist und dient dazu, Abstände d, Winkel und Relativgeschwindigkeiten v von Objekten 18 zu messen, beispielsweise von vorausfahrenden Fahrzeugen. Die Frequenz des Sendesignals wird innerhalb einer Radarmessung mit Sequenzen von steigenden oder fallenden Rampen moduliert.
Lediglich aus Gründen der Übersichtlichkeit ist hier ein bistatisches Antennensystem dargestellt worden, bei dem die Sende-Antennenelemente 12 von den Empfangs-Antennenelementen 14 verschieden sind. In der Praxis kann auch ein monostatisches Antennenkonzept benutzt werden, bei dem zum Senden und zum Empfangen die gleichen Antennenelemente benutzt werden.
Die Antennenelemente 12, 14 sind in einer Richtung, in welcher der Radarsensor 10 winkelauflösend ist, in verschiedenen Positionen angeordnet. In diesem Beispiel sind die Empfangs-Antennenelemente 14 in gleichmäßigen Abständen auf einer Geraden angeordnet (ULA; Uniform Linear Array). Das gleiche gilt auch für die Sende-Antennenelemente 12, wobei die Sende- und Empfangs-Antennenelemente nicht notwendigerweise auf derselben Geraden angeordnet sein müssen. Wenn der Radarsensor zur Messung von Azimutwinkeln der Objekte eingesetzt werden soll, verlaufen die Geraden, auf denen die Antennenelemente angeordnet sind, waagerecht. Bei einem Sensor zur Messung von Elevationswinkeln wären die Antennenelemente hingegen auf vertikalen Geraden angeordnet. Denkbar ist auch zweidimensionales Antennenarray, mit dem sowohl Azimutwinkel als auch Elevationswinkel gemessen werden können.
Im gezeigten Beispiel wird der Radarsensor 10 im Zeitmultiplex-Verfahren betrieben. Zu jedem Zeitpunkt ist maximal eines der M = 2 Sende-Antennenelemente 12 aktiv und sendet das Sendesignal. Die Aktivitätsphasen der einzelnen Antennenelemente 12 wechseln einander zyklisch ab. In Fig. 1 ist der Fall dargestellt, in dem nur das untere der beiden Sende-Antennenelemente 12 aktiv ist.

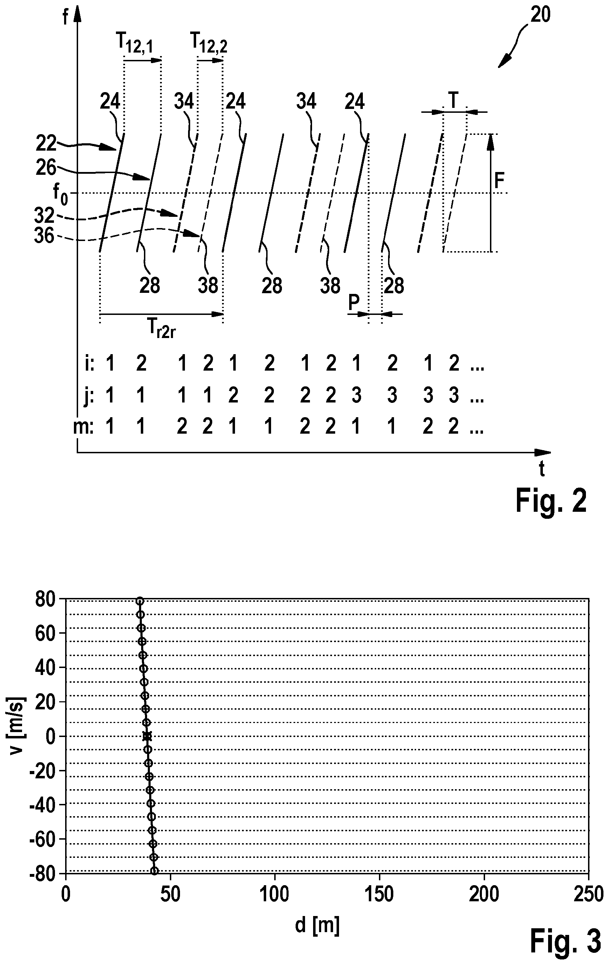

Fig. 2 zeigt die Sendefrequenz f des Sendesignals 20 aufgetragen über der Zeit t. Bei einer Messung werden mit jedem Sende-Antennenelement 12 zwei Sequenzen von Rampen mit identischen Rampenparametern gesendet, die ineinander zeitlich verschachtelt sind. Eine erste Sequenz 22 von Rampen 24 und eine zweite Sequenz 26 von Rampen 28, die einem ersten Sende-Antennenelement 12 zugeordnet sind, sind in Fig. 2 mit durchgezogenen dicken bzw. dünnen Linien dargestellt. Eine erste Sequenz 32 von Rampen 34 und eine zweite Sequenz 36 von Rampen 38, die einem zweiten Sende-Antennenelement 12 zugeordnet sind, sind in Fig. 2 mit gestrichelten dicken bzw. dünnen Linien dargestellt. Die Nummer i der Sequenz, zu der eine Rampe gehört, der jeweilige Rampenindex j der Rampe innerhalb einer Sequenz, und die Nummer m des jeweiligen Antennenelements 12 sind angegeben.

Jedem Sende-Antennenelement m, m=1,...,M, ist ein Zeitversatz T12,m zugeordnet, mit dem die Rampen 28, 38 der jeweiligen zweiten Sequenz 26, 36 gegenüber den Rampen 24, 34 der jeweiligen ersten Sequenz 22, 32 mit gleichem Rampenindex j verschoben sind. Die Zeitversätze T12,1 und T12,2 sind vorzugsweise unterschiedlich groß.

Innerhalb jeder Sequenz sind die aufeinanderfolgenden Rampen zueinander um einen Zeitabstand Tr2r verschoben. Der Zeitabstand Tr2r ist für alle Sequenzen aller Sende-Antennenelemente 12 gleich. Weiter ist wenigstens eine gemeinsame Pause P jeweils zwischen zwei aufeinanderfolgenden Rampen einer Sequenz vorhanden.

In dem in Fig. 2 dargestellten Beispiel ist die Differenz der Rampenmittenfrequenzen von innerhalb einer Sequenz aufeinanderfolgenden Rampen gleich Null. Daher haben alle Rampen denselben Frequenzverlauf. Die Rampenmittenfrequenz entpricht hier der mittleren Sendefrequenz $f_0$.

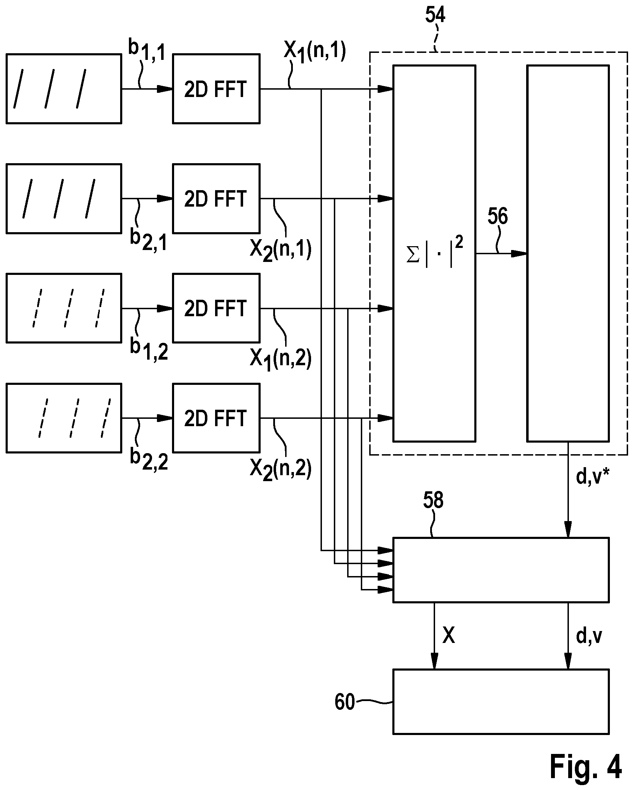

Fig. 4 zeigt schematisch ein detaillierteres Blockdiagramm der von der Steuer- und Auswerteeinheit 16 durchgeführten Operationen zur Bestimmung der Relativgeschwindigkeit v, des Abstands d und des Objektwinkels. Zur Vereinfachung der Darstellung ist die Verarbeitung nur für einen Empfangskanal n dargestellt.

Für jede Sequenz i eines Sende-Antennenelements m werden die empfangenen, abgetasteten Basisbandsignale bi,m jeweils einer zweidimensionalen Fourier-Transformation (2D-FFT) unterzogen. Die erste Dimension entspricht einer Transformation der zu den einzelnen Rampen erhaltenen Basisbandsignale. Die zweite Dimension entspricht einer Transformation über die Sequenz der Rampen, d.h. über den Rampenindex j. Zu jeder Sequenz i eines Sende-Antennenelements m wird so ein zweidimensionales Spektrum $x_i(n,m)$ erhalten. Die Größen der jeweiligen Transformationen, d.h. die jeweiligen Anzahlen der bins (Abtastpunkte oder Stützstellen), sind vorzugsweise für die erste Dimension einheitlich für alle Spektren, und für die zweite Dimension einheitlich für alle Spektren.

Aufgrund der Relativgeschwindigkeit v des Radarziels 18 und dem Zeitversatz T12,m zwischen den einzelnen Sequenzen von Rampen entsprechenden Teilmessungen mit einem Sende-Antennenelement m tritt ein Phasenunterschied zwischen den zwei Teilmessungen auf. Der Phasenunterschied $\Delta\varphi_{12,m}$ ist beispielhaft in Gleichung (2) angegeben. Er wird als Phasenunterschied zwischen den komplexen Amplituden (Spektralwerten) eines in beiden zweidimensionalen Spektren an der gleichen Position (k,l) auftretenden Peaks $X_1(n,m)(k,l)$, $X_2(n,m)(k,l)$ erhalten. Aufgrund des relativ großen Zeitversatzes T12,m zwischen den einander entsprechenden Rampen der jeweiligen beiden Sequenzen erlaubt die Bestimmung des Phasenunterschieds zwischen den beiden Teilmessungen mit demselben Sende-Antennenelement m jedoch keinen direkten Rückschluss auf die Relativgeschwindigkeit v. Denn aufgrund der Periodizität der Phasen ergibt sich für einen einzelnen Phasenunterschied eine Mehrdeutigkeit für den dazugehörigen Wert der Relativgeschwindigkeit v.

Die erhaltenen zweidimensionalen Spektren $x_i(n,m)$ werden einem ersten Funktionsblock 54 zugeführt, der aus den komplexen Spektren jeweils ein Leistungsspektrum berechnet durch Bildung des Quadrates des Absolutbetrags der jeweiligen Spektralwerte, und die Leistungsspektren durch Summation oder Mittelung punktweise zusammenführt zu einem integrierten zweidimensionalen Leistungsspektrum 56.

Die Position eines einem Radarziel 18 entsprechenden Peaks im Leistungsspektrum 56, die hier als Bin k, l angegeben wird, entspricht der Position des Peaks in den einzelnen Spektren $X_i(n,m)$. Aus der ersten Dimension, entsprechend dem Bin k der Position des Peaks, wird gemäß der FMCW-Gleichung $k = 2/c(dF + f_0vT)$ ein linearer Zusammenhang zwischen der Relativgeschwindigkeit v und dem Abstand d des Radarziels erhalten. Dabei ist c die Lichtgeschwindigkeit, F der Rampenhub, T die Rampendauer einer einzelnen Rampe und $f_0$ die mittlere Sendefrequenz. Wenn die Frequenzdifferenz von aufeinanderfolgenden Rampen einer Sequenz gleich Null ist, enthält die Peakposition in der zweiten Dimension l nur Information über die Relativgeschwindigkeit v des Radarziels.

Fig. 3 zeigt schematisch ein Diagramm, in dem die Relativgeschwindigkeit v über dem Abstand d aufgetragen ist. Die lineare Beziehung zwischen v und d ist als Gerade eingezeichnet. Im Beispiel ist die aus der Abtastung der Dopplerfrequenz erhaltene Information über die Relativgeschwindigkeit des Radarziels mit einer Mehrdeutigkeit gemäß dem vorbestimmten Intervall nach Gleichung (1) behaftet, da die Dopplerfrequenz durch die relativ großen Zeitintervalle Tr2r nicht eindeutig abgetastet wird. Zusätzlich zu der v-d-Geraden, die sich gemäß dem Frequenzbin k ergibt, sind die aus dem Frequenzbin l bestimmten, periodischen Werte der Relativgeschwindigkeit v durch gestrichelte Linien dargestellt. Die Schnittpunkte mit der v-d-Geraden sind gekennzeichnet. Sie entsprechen möglichen Wertepaaren (v, d) von Relativgeschwindigkeit und Abstand des Radarziels 18. Das tatsächliche Ziel, dessen Geschwindigkeit v bestimmt werden soll, ist durch ein Kreuz X markiert.

Die Mehrdeutigkeit der ermittelten Geschwindigkeit v wird nun aufgelöst, wie nachfolgend erläutert wird. Die Information v* über die in Frage kommenden, periodischen Werte der Relativgeschwindigkeit v wird an einen zweiten Funktionsblock 58 übergeben, der außerdem die komplexen, zweidimensionalen Spektren $x_i(n,m)$ der Teilmessungen erhält.

Zur Auswertung des gemessenen Phasenunterschieds wird ein Steuerungsvektor a(v) einer idealen Messung in Abhängigkeit der Relativgeschwindigkeit v berechnet gemäß der Gleichung (3), die hier für l=2 Sequenzen lautet:

$$a(v,m) = \frac{1}{\sqrt{2}}\left(e^{2\pi j\frac{2}{c}f_0 T_{12,m}v}\right)$$

Der Messvektor $a_{k,l}(n,m)$ ist entsprechend definiert, wobei anstelle der erwarteten, geschwindigkeitsabhängigen komplexen Werte die komplexen Amplituden (Spektralwerte) an der Position k,l des Peaks der berechneten zweidimensionalen Spektren der Teilmessungen als Komponenten des Vektors eingesetzt werden, wie in Gleichung (4) angegeben; eine Normierung erfolgt in der nachfolgenden Definition einer Likelihood-Funktion.

Anhand der Messvektoren und Steuerungsvektoren wird eine normierte Likelihood-Funktion in Form eines Relativgeschwindigkeitsspektrums S(v) definiert als:

$$S(v) = \frac{1}{\sum_{m=1}^{M}\sum_{n=1}^{N}\left|a_{k,l}^{H}(n,m)\right|^2}\sum_{m=1}^{M}\sum_{n=1}^{N}\left|a_{k,l}^{H}(n,m)a(v,m)\right|^2$$

Dabei bezeichnet $a_{k,l}^{H}(n,m)$ den hermetisch adjungierten Vektor zum Messvektor $a_{k,l}(n,m)$ also einen Zeilenvektor, bei dem die einzelnen Komponenten komplex konjugiert zu den Komponenten des Vektors $a_{k,l}(n,m)$ sind. Die Likelihood-Funktion entspricht somit einer normierten Summe der Betragsquadrate der (komplexen) Skalarprodukte zwischen dem Messvektor und dem Steuerungsvektor der Übertragungskanäle, wobei die Summation über die unterschiedlichen Übertragungskanäle ausgeführt wird, wobei ein Übertragungskanal jeweils eine Kombination von Empfangskanal n und Sende-Schaltzustand m bezeichnet.

Das Relativgeschwindigkeitsspektrum S(v) entspricht im allgemeinen einer Überlagerung periodischer Funktionen der Relativgeschwindigkeit v. Die Maxima der Likelihood-Funktion entsprechen den wahrscheinlichsten Werten des Parameters v. Für sich alleine genommen ist das Relativgeschwindigkeitsspektrum S(v) mehrdeutig. Ein Maximum entspricht jeweils einer im Mittel optimalen Übereinstimmung der sich für den betreffende Wert von v ergebenden, idealen Phasenverschiebungen mit den gemessenen Phasenverschiebungen gemäß den Messvektoren. Eine Auswertung der Funktion S(v) ist jedoch lediglich an den Stellen erforderlich, die den periodischen Werten der Relativgeschwindigkeit v entsprechen, die aus den Auswertungen gemäß der Position des Peaks in den Bins (k, l) erhalten wurden. Im Beispiel sei angenommen, dass sich eine maximale Übereinstimmung bei der tatsächlichen Relativgeschwindigkeit v = 0 m/s ergibt, wo die Funktion S(v) den erwarteten Maximalwert 1 annimmt.

Die Mehrdeutigkeit, die sich aus der Position des Peaks ergibt, kann somit durch die zusätzliche Information aus der Phasenbeziehung aufgelöst werden. Anhand des linearen Zusammenhangs wird ein zu dem ausgewählten Schätzwert für die Relativgeschwindigkeit v gehörender Schätzwert für den Abstand d bestimmt.

Der Funktionsblock 58 gibt die ermittelten Schätzwerte der Relativgeschwindigkeit v und des Abstands d sowie die komplexen Amplituden X der Peaks an einen Winkelschätzer 60 aus. Beispielsweise kann die geschätzte Relativgeschwindigkeit v zur Kompensation der durch die Relativgeschwindigkeit v verursachten Phasenverschiebungen der Spektralwerte der einzelnen Sequenzen gegenüber einer Bezugssequenz genutzt werden. Zusätzlich oder anstelle der Spektren X der Basisbandsignale können die Basisbandsignale b auch direkt an den Winkelschätzer 60 ausgegeben werden, oder es können separat aus den Basisbandsignalen b berechnete Spektren an den Winkelschätzer ausgegeben werden.

Die den unterschiedlichen Sequenzen von Rampen entsprechenden Zeitsignale (Basisbandsignale) werden somit zunächst getrennt verarbeitet. Die Detektion eines Radarziels 18 findet dann in dem durch nicht-kohärente Integration gewonnenen Leistungsspektrum 56 statt. Basierend auf der Detektion und den komplexen Amplituden an der Position des Peaks wird dann die Mehrdeutigkeit der Geschwindigkeit v aufgelöst.

Vorzugsweise wird, wie beschrieben, die nicht-kohärente Zusammenführung der Spektren zum Leistungsspektrum 56 für alle Empfangskanäle und alle Sende-Antennenelemente gemeinsam durchgeführt. Dies verbessert die Peak-Detektion.

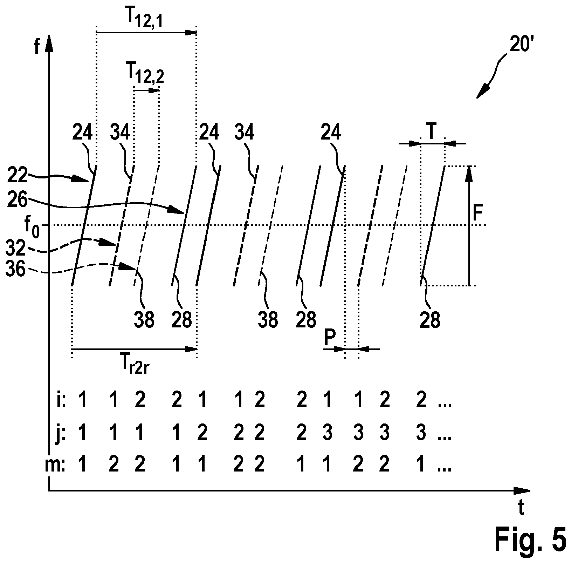

Fig. 5 zeigt schematisch ein weiteres Beispiel eines Sendesignals 20', bei dem gegenüber dem Beispiel der Fig. 2 die Sequenzen in gemischter Reihenfolge verschachtelt sind. Zwischen zwei Rampen 24, 28 mit gleichem Rampenindex j von zwei Sequenzen 22, 26 des Sende-Schaltzustands m=1 ist zumindest eine Rampe (hier: zwei Rampen 34, 38) mit gleichem Rampenindex j eines anderen Sende-Schaltzustands m=2 angeordnet. Die Auswertung erfolgt wie oben beschrieben. Dadurch können Auswirkungen eines etwaigen Schätzfehlers Δv, der bei der Bestimmung des Schätzwertes v für die Relativgeschwindigkeit auftritt, auf die Phasenkorrektur der für die einzelnen Sequenzen eines Sende-Schaltzustands m erhaltenen Signale sich zumindest teilweise gegenseitig ausgleichen.

Das anhand der Beispiele beschriebene Verfahren kann modifiziert werden, indem für wenigstens einen Sende-Schaltzustand eine erste Sequenz i=1 von Rampen und wenigstens zwei weitere Sequenzen i=2, i=3 von Rampen zeitlich verschachtelt gesendet werden. Dabei haben die weiteren Sequenzen von Rampen einen unterschiedlichen Zeitversatz zu der ersten Sequenz. Beispielsweise unterscheidet sich ein Zeitversatz T13,m zwischen einer Rampe der dritten Sequenz und der entsprechenden Rampe der ersten Sequenz von dem Zeitversatz T12,m. Dadurch können die Mehrdeutigkeiten noch besser unterdrückt werden, so dass ein größerer Zeitabstand Tr2r ermöglicht wird.

In Einzelfällen kann es vorkommen, dass zwei Radarziele mit unterschiedlichem Abstand und unterschiedlicher Geschwindigkeit dieselbe Peakposition (k,l) in dem Spektrum 56 haben. Die gemessenen Phasenbeziehungen lassen sich dann nicht einer einzigen Relativgeschwindigkeit eines Radarziels zuordnen. Die Auswerteeinrichtung 16 kann dazu eingerichtet sein, eine solche Störung der Messung zu erkennen anhand einer einen Schwellwert überschreitenden Abweichung der maximalen Übereinstimmung, d.h. dem Maximalwert der in Frage kommenden Werte des Relativgeschwindigkeitsspektrums S(v), von dem zu erwartenden Maximalwert 1. Die Auswerteeinrichtung 16 kann dann ein Störungssignal ausgeben. Eine vorübergehend auftretende Mehrfachbelegung eines Peaks im Spektrum 56 kann aber auch daran erkannt werden, dass die Auswerteeinrichtung 16 bei einem anhand der geschätzten Werte von v und d eines Radarziels 18 durchgeführten Trackings von detektierten Objekten über mehrere Messzyklen eine Fehldetektion erkennt.

Vorzugsweise werden für mehrere, nacheinander ausgeführte Radarmessungen unterschiedlichen Modulationsparameter der Rampen verwendet, beispielsweise unterschiedliche Mittenfrequenzen, Rampensteigungen, Zeitabstände Tr2r und/oder Zeitversätze T12,m. Dadurch können zufällige Mehrfachbelegungen von Peakpositionen auf Einzelfälle beschränkt werden.

Anstelle einer nicht-kohärenten Zusammenführung der einzelnen Spektren zu dem Leistungsspektrum 56 ist es auch denkbar, Empfangskanäle n mittels digitaler Strahlformung (beam forming) zu einem Empfangskanal zusammenzufassen. Dabei werden z.B. für den jeweiligen Sende-Schaltzustand m die Spektren bzw. Messvektoren von N Empfangskanälen kohärent, d.h. unter Berücksichtigung der Phase, mit jeweiligen Gewichtungsfaktoren addiert. In den Beziehungen für S(v) entfallen dann dementsprechend die Summationen über n.

**Patentansprüche**

1. Verfahren zur Ortung eines Radarziels (18) mit einem winkelauflösenden MIMO-FMCW-Radarsensor (10), bei dem empfangene Signale mit dem gesendeten Signal (20) zu Basisbandsignalen (b) heruntergemischt werden, und der Winkel eines georteten Radarziels (18) anhand von Amplituden und/oder Phasenbeziehungen zwischen Basisbandsignalen (b) bestimmt wird, die für unterschiedliche Auswahlen von zum Senden und Empfangen verwendeten Antennenelementen (12; 14) des Radarsensors (10) erhalten werden, wobei

   (a) das gesendete Signal (20) rampenförmig frequenzmoduliert wird und ein Modulationsmuster aufweist, das mehrere Sequenzen (22; 26; 32; 36) von Rampen (24;28; 34; 38) umfasst, die innerhalb der jeweiligen Sequenz mit einem Zeitintervall (Tr2r) zeitversetzt aufeinander folgen,
   wobei wenigstens zwei der Sequenzen (22; 26; 32; 36) unterschiedlichen Sende-Schaltzuständen (m), die sich in der Auswahl der zum Senden verwendeten Antennenelemente (12) unterscheiden, zugeordnet sind und zeitlich ineinander verschachtelt sind,
   wobei zwischen aufeinander folgenden Rampen (24;28; 34; 38), die unterschiedlichen Sende-Schaltzuständen (m) zugeordnet sind, umgeschaltet wird zwischen den betreffenden Sende-Schaltzuständen (m),
   **dadurch gekennzeichnet, dass**
   in Schritt (a) wenigstens einem der Sende-Schaltzustände (m) jeweils wenigstens zwei der Sequenzen (22; 26) zugeordnet sind, die zeitlich ineinander verschachtelt sind und untereinander in Bezug auf eine erste Sequenz (22) einen einer jeweiligen weiteren Sequenz (26) zugeordneten Zeitversatz (T12,m) aufweisen,
   (b) aus den Basisbandsignalen (b) zumindest für den wenigstens einen Sende-Schaltzustand (m), dem mehrere Sequenzen (22; 26) zugeordnet sind, gesondert für jede dieser Sequenzen (22; 26) durch zweidimensionale Fourier-Transformation ein zweidimensionales Spektrum (X) berechnet wird, wobei in der ersten Dimension Rampe für Rampe transformiert wird und in der zweiten Dimension über einen Rampenindex (j) transformiert wird, der die Rampen innerhalb der Sequenz zählt,
   (c) anhand einer Position (k, l) eines Peaks in wenigstens einem zweidimensionalen Spektrum (56) der Basisbandsignale (b) Werte für die Relativgeschwindigkeit (v) eines Radarziels (18) bestimmt werden, die mit einer vorbestimmten Geschwindigkeitsperiode periodisch sind,
   (d) Phasenbeziehungen von Spektralwerten, die an jeweils der gleichen Position (k,l) und jeweils für den gleichen Sende-Schaltzustand (m) in den gesondert berechneten zweidimensionalen Spektren (X) erhalten werden, überprüft werden auf Übereinstimmung mit für mehrere der periodischen Werte der Relativgeschwindigkeit (v) bei dem jeweiligen Sende-Schaltzustand erwarteten Phasenbeziehungen (a(v,m)), wobei die erhaltene Phasenbeziehung von zweien der Spektralwerte eine Mehrdeutigkeit für einen dazugehörigen Wert der Relativgeschwindigkeit (v) innerhalb eines Messbereichs für die Relativgeschwindigkeit ergibt, und dass

(e) aus den bestimmten, periodischen Werten der Relativgeschwindigkeit (v) anhand des Ergebnisses der Überprüfung ein Schätzwert für die Relativgeschwindigkeit (v) des Radarziels (18) ausgewählt wird, wobei der Schätzwert für die Relativgeschwindigkeit (v) des Radarziels (18) in dem Messbereich für die Relativgeschwindigkeit eindeutig bestimmt wird.

2. Verfahren nach Anspruch 1, bei dem wenigstens zweien der Sende-Schaltzustände (m) jeweils wenigstens zwei der Sequenzen (22; 26; 32; 36) zugeordnet sind, die zeitlich ineinander verschachtelt sind und untereinander in Bezug auf eine erste Sequenz (22; 32) des jeweiligen Sende-Schaltzustands (m) einen einer jeweiligen weiteren Sequenz (26; 36) des Sende-Schaltzustands (m) zugeordneten Zeitversatz (T12,m) aufweisen, wobei bei den unterschiedlichen Sende-Schaltzuständen (m) unterschiedliche Zeitversätze (T12,1; T12,2) der weiteren Sequenzen (26; 36) verwendet werden.

3. Verfahren nach einem der vorstehenden Ansprüche, bei dem innerhalb einer jeweiligen Sequenz (22; 26; 32; 36) aufeinanderfolgende Rampen (24; 28 ; 34; 38) eine gleiche Rampensteigung (F/T) haben und eine gleiche Differenz ihrer Rampenmittenfrequenzen haben,
wobei die besagte Differenz der Rampenmittenfrequenzen optional ungleich Null ist, und
wobei Rampen (24;28 ; 34; 38), welche den gleichen Rampenindex (j) in den jeweiligen Sequenzen (22; 26; 32; 36) haben, die gleiche Rampensteigung (F/T) und die gleiche Rampenmittenfrequenz aufweisen.

4. Verfahren nach einem der vorstehenden Ansprüche, bei dem die Rampen (24; 28; 34; 38) der Sequenzen (22; 26; 32; 36) den gleichen Frequenzhub (F) haben.

5. Verfahren nach einem der vorstehenden Ansprüche, bei dem die zumindest für den wenigstens einen Sende-Schaltzustand (m), dem mehrere Sequenzen zugeordnet sind, für jede der Sequenzen (22; 26) gesondert berechneten zweidimensionalen Spektren (X) zu einem zweidimensionalen Spektrum (56) der Basisbandsignale (b) zusammengeführt werden, welches in dem Schritt (c) des Bestimmens von Werten für die Relativgeschwindigkeit (v) verwendet wird.

6. Verfahren nach einem der vorstehenden Ansprüche, wobei bei dem Überprüfen der Phasenbeziehung eine Beziehung gemäß der Gleichung

$$\Delta \varphi_{12,m} = 2\pi \frac{2}{c} f_0 T_{12,m} v$$

verwendet wird, welche eine erwartete Phasendifferenz $\Delta\varphi_{12,m}$ zwischen einer Phase des Spektralwerts des jeweiligen Spektrums (X) einer weiteren Sequenz (26) und einer Phase des Spektralwerts des Spektrums (X) der ersten Sequenz (22) in Beziehung setzt mit dem der weiteren Sequenz (26) des Sende-Schaltzustands m zugeordneten Zeitversatz T12,m und der Relativgeschwindigkeit v, wobei c die Lichtgeschwindigkeit ist und $f_0$ die mittlere Sendefrequenz ist.

7. Verfahren nach einem der vorstehenden Ansprüche, wobei bei dem Überprüfen der Phasenbeziehung auf Übereinstimmung mit erwarteten Phasenbeziehungen das Quadrat eines Absolutbetrags eines komplexen Skalarproduktes $a_{k,l}^{H}(n,m)a(v,m)$ eines Messvektors $a_{k,l}(n,m)$ mit einem von dem Wert v der Relativgeschwindigkeit abhängigen Steuerungsvektor a(v,m) berechnet wird, wobei m einen Sende-Schaltzustand bezeichnet und n einen verwendeten Empfangskanal bezeichnet, wobei die Komponenten des Messvektors $a_{k,l}(n,m)$ die Spektralwerte der für die dem Sende-Schaltzustand m zugeordneten Sequenzen gesondert berechneten Spektren (X) des Empfangskanals n an der Position (k,l) des Peaks sind, wobei $a_{k,l}^{H}(n,m)$ der hermitesch adjungierte Vektor zu $a_{k,l}(n,m)$ ist, und wobei der Steuerungsvektor a(v,m) ein Steuerungsvektor einer idealen Messung für ein Radarziel mit einer Relativgeschwindigkeit v ist, wobei die Komponenten des Steuerungsvektors a(v,m) bis auf einen gemeinsamen Normierungsfaktor jeweils die für den der jeweiligen Sequenz (26) des Sende-Schaltzustands m zugeordneten Zeitversatz (T12,m) erwartete Phasendifferenz $(\Delta\varphi_{12,m})$ zur ersten Sequenz (22) sind, wobei die erste Komponente des Steuerungsvektors a(v,m) bis auf den gemeinsamen Normierungsfaktor gleich 1 ist.

8. Verfahren nach einem der vorstehenden Ansprüche, wobei bei dem Überprüfen der Phasenbeziehung auf Übereinstimmung mit erwarteten Phasenbeziehungen ein jeweiliger Grad einer Übereinstimmung S(v) bestimmt wird gemäß der Beziehung:

$$S(v) = \frac{1}{\sum_{(m,n)\in MN} \left| a_{k,l}^{H}(n,m) \right|^2} \sum_{(m,n)\in MN} \left| a_{k,l}^{H}(n,m)a(v,m) \right|^2$$

wobei MN verwendete Kombinationen von Sende-Schaltzuständen m und Empfangskanälen n sind, $a_{k,l}(n,m)$ ein Messvektor ist, dessen Komponenten die Spektralwerte der für die Basisbandsignale (b) der einzelnen Sequenzen (22; 26; 32; 36) des Sende-Schaltzustands m und für die einzelnen Empfangskanäle n jeweils gesondert berechneten Spektren (X) an der Position (k,l) des Peaks sind, $a_{k,l}^{H}(n,m)$ der hermitesch adjungierte Vektor zu $a_{k,l}(n,m)$ ist, und a(v,m) ein Steuerungsvektor der idealen Messung mit dem Sende-Schaltzustand m für ein Radarziel mit einer Relativgeschwindigkeit v ist.

9. Verfahren nach einem der vorstehenden Ansprüche, bei dem im Falle einer Störung der Phasenbeziehung zwischen den besagten Spektralwerten, die einer Situation entspricht, in welcher zwei Radarziele mit unterschiedlicher Relativgeschwindigkeit die gleiche Position (k,l) in dem wenigstens einen zweidimensionalen Spektrum (56) belegen, das Vorliegen der Störung daran erkannt wird, dass ein erwarteter Grad der Übereinstimmung der Phasenbeziehung mit den erwarteten Phasenbeziehungen nicht erreicht wird.

10. Verfahren nach einem der vorstehenden Ansprüche, bei dem anhand einer Position (k) des Peaks in der ersten Dimension des wenigstens einen zweidimensionalen Spektrums (56) ein linearer Zusammenhang zwischen dem Abstand (d) und der Relativgeschwindigkeit (v) des Radarziels (18) bestimmt wird und anhand einer Position (l) des Peaks in der zweiten Dimension des wenigstens einen zweidimensionalen Spektrums (56) zumindest die Werte für die Relativgeschwindigkeit (v) des Radarziels (18) bestimmt werden, die mit der vorbestimmten Geschwindigkeitsperiode periodisch sind.

11. MIMO-FMCW-Radarsensor mit einer Steuer- und Auswerteeinrichtung (16), in der ein Verfahren nach einem der Ansprüche 1 bis 10 implementiert ist.

## Claims

1. Method for locating a radar target (18) using an angle-resolving MIMO-FMCW radar sensor (10), in which received signals with the transmitted signal (20) are downmixed to baseband signals (b) and the angle of a located radar target (18) is determined on the basis of amplitudes and/or phase relationships between baseband signals (b) which are obtained for different selections of antenna elements (12; 14) of the radar sensor (10) used for transmission and reception, wherein

(a) the transmitted signal (20) is frequency modulated in ramp-shaped fashion and has a modulation pattern comprising a plurality of sequences (22; 26; 32; 36) of ramps (24; 28; 34; 38), which follow one another within the respective sequence, time offset by a time interval (Tr2r) ,
wherein at least two of the sequences (22; 26; 32; 36) are assigned to different transmission switching states (m), which differ in the selection of the antenna elements (12) used for transmission, and are temporally interleaved,
wherein, between successive ramps (24; 28; 34; 38) assigned to different transmission switching states (m), there is a switch between the relevant transmission switching states (m),
**characterized in that**
at least two of the sequences (22; 26) which are temporally interleaved and, in respect to one another, have in relation to a first sequence (22) a time offset (T12,m) assigned to a respective further sequence (26) are in each case assigned to at least one of the transmission switching states (m) in step (a),
(b) a two-dimensional spectrum (X) is calculated from the baseband signals (b) at least for the at least one transmission switching state (m) which has assigned a plurality of sequences (22; 26), separately for each of these sequences (22; 26) by way of a two-dimensional Fourier transform, wherein there is a ramp-by-ramp transformation in the first dimension and a transformation of a ramp index (j) which counts the ramps within the sequence in the second dimension,

(c) values for the relative speed (v) of a radar target (18) are determined on the basis of a position (k, 1) of a peak in at least one two-dimensional spectrum (56) of the baseband signals (b), said values for the relative speed being periodic with a predetermined speed period,

(d) phase relationships of the spectral values which are obtained in each case for the same position (k, 1) and the same transmission switching state (m) in the separately calculated two-dimensional spectra (X) are examined for correspondence with expected phase relationships (a(v,m)) for a plurality of the periodic values of the relative speed (v) in the respective transmission switching state, wherein the obtained phase relationship of two of the spectral values yields an ambiguity for an associated value of the relative speed (v) within a measurement range for the relative speed, and **in that**

(e) an estimate for the relative speed (v) of the radar target (18) is selected from the determined, periodic values of the relative speed (v) on the basis of the result of the examination, wherein the estimate for the relative speed (v) of the radar target (18) is uniquely determined in the measurement range for the relative speed.

2. Method according to Claim 1, wherein at least two of the sequences (22; 26; 32; 36) which are temporally interleaved and, in respect to one another, have in relation to a first sequence (22; 32) of the respective transmission switching state (m) a time offset (T12,m) assigned to a respective further sequence (26; 36) of the transmission switching state (m) are in each case assigned to at least two of the transmission switching states (m), wherein different time offsets (T12,1; T12,2) of the further sequences (26; 36) are used in the different transmission switching states (m).

3. Method according to either of the preceding claims, wherein successive ramps (24; 28; 34; 38) within a respective sequence (22; 26; 32; 36) have the same ramp slope (F/T) and have the same difference of their ramp centre frequencies,

wherein said difference of the ramp centre frequencies is optionally not equal to zero, and

wherein ramps (22; 28; 34; 38) with the same ramp index (j) in the respective sequences (22; 26; 32; 36) have the same ramp slope (F/T) and the same ramp centre frequency.

4. Method according to any one of the preceding claims, wherein the ramps (24; 28; 34; 38) of the sequences (22; 26; 32; 36) have the same frequency deviation (F).

5. Method according to any one of the preceding claims, wherein the two-dimensional spectra (X) separately calculated for each of the sequences (22; 26) at least for the at least one transmission switching state (m) which has assigned a plurality of sequences are combined to form a two-dimensional spectrum (56) of the baseband signals (b), which two-dimensional spectrum is used in step (c) of determining values of the relative speed (v).

6. Method according to any one of the preceding claims, wherein a relationship according to the equation

$$\Delta\varphi_{12,m} = 2\pi\frac{2}{c}f_0 T_{12,m}v$$

is used when examining the phase relationship, said relationship relating an expected phase difference $\Delta\varphi_{12,m}$ between a phase of the spectral value of the respective spectrum (X) of a further sequence (26) and a phase of the spectral value of the spectrum (X) of the first sequence (22) to the time offset T12,m assigned to the further sequence (26) of the transmission switching state m and the relative speed v, where c is the speed of light and $f_0$ is the mean transmission frequency.

7. Method according to any one of the preceding claims, wherein the square of an absolute value of a complex scalar product $a_{k,l}^H(n,m)a(v,m)$ of a measurement vector $a_{k,l}(n,m)$ with a control vector a(v,m) that depends on the value v of the relative speed is calculated when the phase relationship is examined for correspondence with expected phase relationships, where m denotes a transmission switching state and n denotes an employed reception channel, wherein the components of the measurement vector $a_{k,l}(n,m)$ are the spectral values of the spectra (X) of the reception channel n at the position (k,l) of the peak, which spectra are calculated separately for the sequences assigned to the transmission switching state m, where $a_{k,l}^H(n,m)$ is the Hermitian adjoint vector of $a_{k,l}(n,m)$, and where the control vector a(v,m) is a control vector of an ideal measurement for a radar target with a relative speed v, wherein the components of the control vector a(v,m) each are, apart from the common normalization factor, the phase difference $(\Delta\varphi_{12,m})$ from the first sequence (22) expected for the time offset (T12,m) assigned to the respective sequence (26) of the transmission switching state m, wherein the first component of the control vector a(v,m) equals 1 apart from the common normalization factor.

8. Method according to any one of the preceding claims, wherein the respective degree of the correspondence S(V) is determined when examining the phase relationship for correspondence with the expected phase relationships, said correspondence being determined according to the relationship:

$$S(v) = \frac{1}{\sum_{(m,n)\in MN}\left|a_{k,l}^{H}(n,m)\right|^{2}} \sum_{(m,n)\in MN}\left|a_{k,l}^{H}(n,m)a(v,m)\right|^{2}$$

where MN are used combinations of transmission switching states m and reception channels n, $a_{k,l}(n,m)$ is a measurement vector, the components of which are the spectral values of the spectra (X) at the position (k,l) of the peak, which spectra are in each case calculated separately for the baseband signals (b) of the individual sequences (22; 26; 32; 36) of the transmission switching state m and for the individual reception channels n, $a_{k,l}^{H}(n,m)$ is the Hermitian adjoint vector of $a_{k,l}(n,m)$, and a(v,m) is a control vector of the ideal measurement with the transmission switching state m for a radar target with a relative speed v.

9. Method according to any one of the preceding claims wherein, in the case of a disturbance of the phase relationship between said spectral values which corresponds to a situation in which two radar targets with different relative speed occupy the same position (k, 1) in the at least one two-dimensional spectrum (56), the presence of the disturbance is identified by virtue of an expected degree of correspondence of the phase relationship with the expected phase relationships not being achieved.

10. Method according to any one of the preceding claims, wherein a linear relationship between the distance (d) and the relative speed (v) of the radar target (18) is determined on the basis of a position (k) of the peak in the first dimension of the at least one two-dimensional spectrum (56) and at least the values for the relative speed (v) of the radar target (18), which are periodic with a predetermined speed period, are determined on the basis of a position (1) of the peak in the second dimension of the at least one two-dimensional spectrum (56) .

11. MIMO-FMCW radar sensor comprising a control and evaluation device (16), in which a method according to any one of Claims 1 to 10 is implemented.

**Revendications**

1. Procédé de localisation d'une cible radar (18), comprenant un capteur radar MIMO-FMCW (10) à résolution angulaire dans lequel des signaux reçus sont abaissés en signaux de bande de base (b) par le signal émis (20), et l'angle d'une cible radar (18) localisée est déterminé à l'aide d'amplitudes et/ou de relations de phase entre les signaux de bande de base (b) qui sont obtenues pour différentes sélections d'éléments d'antenne (12 ; 14) du capteur radar (10), utilisés pour l'émission et la réception, dans lequel

(a) le signal émis (20) est modulé en fréquence en forme de rampe et présente un schéma de modulation qui comprend plusieurs séquences (22 ; 26 ; 32 ; 36) de rampes (24 ; 28 ; 34 ; 38) qui se suivent avec un décalage dans le temps avec un intervalle de temps (Tr2r) à l'intérieur de la séquence respective, au moins deux des séquences (22 ; 26 ; 32 ; 36) étant associées à différents états de commutation d'émission (m) qui se distinguent par la sélection des éléments d'antenne (12) utilisés pour l'émission et qui sont mutuellement imbriquées dans le temps, une commutation entre les différents états de commutation d'émission (m) étant effectuée entre des rampes (24 ; 28 ; 34 ; 38) successives, associées à différents états de commutation d'émission (m), **caractérisé en ce que** à l'étape (a), au moins l'un des états de commutation d'émission (m) est associé respectivement à au moins deux des séquences (22 ; 26) qui sont mutuellement imbriquées dans le temps et présentent mutuellement un décalage dans le temps (T12,m) associé à une séquence supplémentaire (26) respective concernant une première séquence (22), (b) à partir des signaux de bande de base (b), au moins pour ledit au moins un état de commutation d'émission (m) auquel plusieurs séquences (22 ; 26) sont associées, un spectre bidimensionnel (X) est calculé séparément pour chacune de ces séquences (22 ; 26) par une transformation de Fourier bidimensionnelle, dans lequel, dans la première dimension, la transformation est effectuée rampe à rampe, et dans la deuxième dimension, la transformation est effectuée par l'intermédiaire d'un indice de rampe (j) qui compte les rampes à l'intérieur de la séquence,

(c) à l'aide d'une position (k, l) d'un pic dans au moins un spectre bidimensionnel (56) des signaux de bande de base (b), des valeurs pour la vitesse relative (v) d'une cible radar (18) sont déterminées qui sont périodiques avec une période de vitesse prédéterminée,

(d) des relations de phase de valeurs spectrales, qui sont obtenues respectivement à la même position (k,l) et respectivement pour le même état de commutation d'émission (m) dans les spectres bidimensionnels (X) calculés séparément, sont contrôlées quant à une concordance avec des relations de phase (a(v,m)) attendues pour plusieurs des valeurs périodiques de la vitesse relative (v) à l'état de commutation d'émission respectif, la relation de phase obtenue de deux des valeurs spectrales aboutissant à une ambiguïté pour une valeur associée de la vitesse relative (v) à l'intérieur d'une plage de mesure pour la vitesse relative, et **en ce que**

(e) à partir des valeurs périodiques déterminées de la vitesse relative (v), à l'aide du résultat du contrôle, une valeur estimée pour la vitesse relative (v) de la cible radar (18) est sélectionnée, la valeur estimée pour la vitesse relative (v) de la cible radar (18) étant déterminée de manière univoque dans la plage de mesure pour la vitesse relative.

2. Procédé selon la revendication 1, dans lequel au moins deux des états de commutation d'émission (m) sont associés respectivement à au moins deux des séquences (22 ; 26 ; 32 ; 36) qui sont mutuellement imbriquées dans le temps et présentent mutuellement un décalage dans le temps (T12,m) concernant une première séquence (22 ; 32) de l'état de commutation d'émission (m) respectif, associé à une séquence supplémentaire (26 ; 36) respective, différents décalages dans le temps (T12,1 ; T12,2) des séquences supplémentaires (26 ; 36) étant utilisés pour les différents états de commutation d'émission (m).

3. Procédé selon l'une quelconque des revendications précédentes, dans lequel, à l'intérieur d'une séquence respective (22 ; 26 ; 32 ; 36), des rampes successives (24 ; 28 ; 34 ; 38) présentent une même pente de rampe (F/T) et une même différence de leurs fréquences centrales de rampe,
dans lequel ladite différence des fréquences centrales de rampe est en option différente de zéro, et
dans lequel les rampes (24 ; 28 ; 34 ; 38), qui présentent le même indice de rampe (j) dans les séquences respectives (22 ; 26 ; 32 ; 36), présentent la même pente de rampe (F/T) et la même fréquence centrale de rampe.

4. Procédé selon l'une quelconque des revendications précédentes, dans lequel les rampes (24 ; 28 ; 34 ; 38) des séquences (22 ; 26 ; 32 ; 36) présentent le même écart de fréquence (F).

5. Procédé selon l'une quelconque des revendications précédentes, dans lequel les spectres bidimensionnels (X), calculés séparément pour chacune des séquences (22 ; 26), au moins pour ledit au moins un état de commutation d'émission (m) auquel plusieurs séquences sont associées, sont fusionnés en un spectre bidimensionnel (56) des signaux de bande de base (b) qui est utilisé à l'étape (c) de la détermination de valeurs pour la vitesse relative (v).

6. Procédé selon l'une quelconque des revendications précédentes, dans lequel, lors du contrôle de la relation de phase, une relation selon l'équation

$$\Delta\varphi_{12,m} = 2\pi\frac{2}{c}f_0 T_{12,m}v$$

est utilisée qui met en corrélation une différence de phase attendue $\Delta\varphi_{12,m}$ entre une phase de la valeur spectrale du spectre respectif (X) d'une séquence supplémentaire (26) et une phase de la valeur spectrale du spectre (X) de la première séquence (22) avec le décalage dans le temps T12,m associé à la séquence supplémentaire (26) de l'état de commutation d'émission (m) et la vitesse relative v, où c est la vitesse de la lumière et $f_0$ est la fréquence d'émission moyenne.

7. Procédé selon l'une quelconque des revendications précédentes, dans lequel, lors du contrôle de la relation de phase quant à une concordance avec des relations de phase attendues, le carré d'une valeur absolue d'un produit scalaire complexe $a_{k,l}^H(n,m)a(v,m)$ d'un vecteur de mesure $a_{k,l}(n,m)$ est calculé avec un vecteur de commande a(v,m) dépendant de la valeur v de la vitesse relative, où m désigne un état de commutation d'émission et n désigne un canal de réception utilisé, dans lequel les composantes du vecteur de mesure $a_{k,l}(n,m)$ sont les valeurs spectrales pour les spectres (X), calculés séparément pour les séquences associées à l'état de commutation d'émission m, du canal de réception n à la position (k,l) du pic, où $a_{k,l}^{H}(n,m)$ est le vecteur adjoint hermitien de $a_{k,l}(n,m)$, et le vecteur de commande a(v,m) étant un vecteur de commande d'une mesure idéale pour une cible radar d'une vitesse relative v, dans lequel les composantes du vecteur de commande a(v,m), à l'exception d'un facteur de normalisation commun, correspondent respectivement à la différence de phase ($\Delta\varphi_{12,m}$) par rapport à la première séquence (22) attendue pour le décalage dans le temps (T12,m) associé à la séquence respective (26) de l'état de commutation d'émission m, la première composante du vecteur de commande a(v,m) étant égale à 1, à l'exception du facteur de normalisation commun.

8. Procédé selon l'une quelconque des revendications précédentes, dans lequel, lors du contrôle de la relation de phase quant à une concordance avec des relations de phase attendues, un degré respectif d'une concordance S(v) est déterminé selon la relation :

$$S(v) = \frac{1}{\sum_{(m,n)\in MN}\left|a_{k,l}^{H}(n,m)\right|^{2}} \sum_{(m,n)\in MN}\left|a_{k,l}^{H}(n,m)a(v,m)\right|^{2}$$

où MN sont des combinaisons utilisées d'états de commutation d'émission m et de canaux de réception n, $a_{k,l}(n,m)$ est un vecteur de mesure dont les composantes sont les valeurs spectrales des spectres (X) respectivement calculés séparément pour les signaux de bande de base (b) des séquences individuelles (22 ; 26 ; 32 ; 36) de l'état de commutation d'émission m et pour les canaux de réception individuels n à la position (k,l) des pics, $a_{k,l}^{H}(n,m)$ est le vecteur adjoint hermitien pour $a_{k,l}(n,m)$, et a(v,m) est un vecteur de commande de la mesure idéale avec l'état de commutation d'émission m pour une cible radar ayant une vitesse relative v.

9. Procédé selon l'une quelconque des revendications précédentes, dans lequel, en cas de perturbation de la relation de phase entre lesdites valeurs spectrales, qui correspond à une situation dans laquelle deux cibles radar à vitesse relative différente occupent la même position (k,l) dans ledit au moins un spectre bidimensionnel (56), la présence de la perturbation est reconnue en ce qu'un degré attendu de la concordance de la relation de phase avec les relations de phase attendues n'est pas atteint.

10. Procédé selon l'une quelconque des revendications précédentes, dans lequel, à l'aide d'une position (k) du pic dans la première dimension de l'au moins un spectre bidimensionnel (56), une relation linéaire entre la distance (d) et la vitesse relative (v) de la cible radar (18) est déterminée, et à l'aide d'une position (1) du pic dans la deuxième dimension de l'au moins un spectre bidimensionnel (56), au moins les valeurs pour la vitesse relative (v) de la cible radar (18) sont déterminées qui sont périodiques avec la période de vitesse prédéterminée.

11. Capteur radar MIMO-FMCW, comprenant un dispositif de commande et d'évaluation (16) dans lequel est mis en œuvre un procédé selon l'une quelconque des revendications 1 à 10.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010115418 A2
- EP 0730166 A1
- DE 102012008350 A1
- JP 2009288223 A
- EP 2060929 A1